# FASCICULE DE BREVET EUROPEEN

(11) **EP 3 255 876 B1**
(45) Date de publication et mention de la délivrance du brevet: **06.09.2023**
(21) Numéro de dépôt: 17173500.4
(22) Date de dépôt: 30.05.2017
(51) Int. Cl.: G06T 7/80, G06F 21/32, H04N 17/00, H04L 9/40, G06V 10/147, G06V 40/16, H04N 23/611, H04N 23/90

(54) **PROCÉDÉ D'AUTOCALIBRATION D'UN RÉSEAU DE CAMÉRAS ET INSTALLATION CORRESPONDANTE**
SELBSTKALIBRIERUNGSVERFAHREN EINES NETZWERKS AUS KAMERAS, UND ENTSPRECHENDE ANLAGE
A METHOD OF AUTOMATICALLY CALIBRATING AN ARRAY OF CAMERAS, AND A CORRESPONDING INSTALLATION

(30) Priorité: 07.06.2016 FR 1655215
(43) Date de publication de la demande: 13.12.2017
(73) Titulaire: Idemia Identity & Security France, 92400 Courbevoie (FR)
(72) Inventeur: DESPIEGEL, Vincent, 92130 Issy-Les-Moulineaux (FR); BAUDRY, Christelle Maria France, 92130 Issy-Les-Moulineaux (FR)
(74) Mandataire: Idemia

(56) Documents cités:
- EP-A1- 2 309 451
- US-A1- 2007 008 405
- US-A1- 2012 275 667
- ERIKSSON A ET AL: "TOWARDS 3-DIMENSIONAL FACE RECOGNITION", 1999 IEEE AFRICON 5TH. AFRICON CONFERENCE IN AFRICA. CAPE TOWN, SOUTH AFRICA, SEPT. 28 - OCT. 1, 1999; [IEEE AFRICON CONFERENCE IN AFRICA], NEW YORK, NY : IEEE, US, 28 septembre 1999 (1999-09-28), pages 401-406, XP000895854, ISBN: 978-0-7803-5547-7

## Description

La présente invention concerne la gestion d'un réseau de caméras utilisable par exemple à des fins de reconnaissance biométrique.

### ETAT DE LA TECHNIQUE

Il existe des installations comprenant des caméras qui ont des champs couvrant un lieu en présentant une zone de recouvrement et qui sont reliées à une unité de traitement exécutant un programme de reconnaissance biométrique de visages. Ce programme est agencé pour détecter un visage dans les images qui lui sont fournies par les caméras. Ce programme est également agencé pour détecter, dans ce visage, des points caractéristiques sémantiquement définis comme : le coin de la bouche droit, le coin de la bouche gauche, le coin extérieur de l'œil gauche, le coin intérieur de l'œil gauche, le coin extérieur de l'œil droit, le coin intérieur de l'œil droit, le bout du nez... Ces points caractéristiques, et d'autres, sont utilisées pour mettre l'image du visage dans une position de référence et déterminer ultérieurement si ce visage correspond à un visage dont les caractéristiques biométriques ont été mémorisées dans une base de données ou dans un document d'identité.

Le lieu en question est par exemple un sas d'entrée dans une enceinte sécurisée dont l'accès n'est autorisé qu'aux personnes reconnues par le programme de reconnaissance biométrique. Pour améliorer la fiabilité de cette reconnaissance, il est important de pouvoir déterminer la position de la personne dans son environnement, ce qui est possible avec un réseau de caméras calibré. Cette opération de calibration est actuellement effectuée par un opérateur au moment de la première mise en service de l'installation et périodiquement lors d'opérations de maintenance. Cette opération est délicate et, si elle n'est pas répétée régulièrement, ne peut empêcher l'apparition de dérives dans le temps au cours du fonctionnement de l'installation. On connaît déjà par le document EP2309451 des procédés de calibration selon le préambule de la revendication 1. Un tel procédé ne couvre toutefois aucunement la reconnaissance biométrique des visages par des caméras couvrant ensemble un même couloir formant sas.

### OBJET DE L'INVENTION

Un but de l'invention est de permettre de simplifier la calibration de telles caméras.

### BREF EXPOSE DE L'INVENTION

A cet effet, on prévoit, selon l'invention, un procédé d'auto-calibration selon la revendication 1.

Selon un exemple de réalisation, les points caractéristiques sémantiquement définis comprennent l'un au moins des points suivants :
- coin de la bouche droit,
- coin de la bouche gauche,
- coin extérieur de l'œil gauche,
- coin extérieur de l'œil droit,
- coin intérieur de l'œil gauche,
- coin intérieur de l'œil droit,
- centre intérieur de l'œil gauche,
- centre intérieur de l'œil droit,
- bout du nez.

L'invention concerne également une installation de reconnaissance biométrique mettant en œuvre ce procédé.

D'autres caractéristiques et avantages de l'invention ressortiront à la lecture de la description qui suit de modes de réalisation particuliers non limitatifs de l'invention.

### BREVE DESCRIPTION DES FIGURES

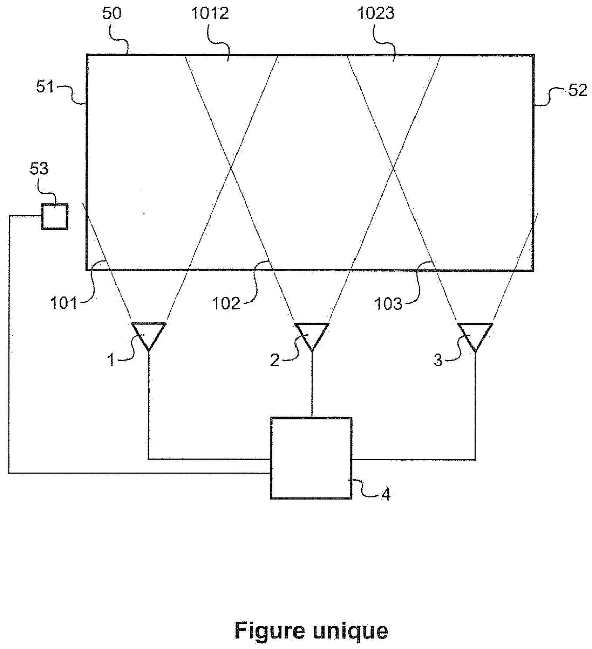

Il sera fait référence à la figure unique annexée qui est une vue schématique de dessus d'une installation de reconnaissance de visages permettant la mise en œuvre du procédé de l'invention.

### DESCRIPTION DETAILLEE DE L'INVENTION

En référence à la figure, l'installation selon l'invention comprend au moins une première caméra 1, une deuxième caméra 2 et une troisième caméra 3 qui sont reliées à une unité de traitement 4 exécutant un programme de reconnaissance biométrique de visages qui est capable de détecter, dans une image représentant un visage, des points caractéristiques sémantiquement définis et des données biométriques de ce visage. Les points caractéristiques sémantiquement définis comprennent par exemple : le coin de la bouche droit, le coin de la bouche gauche, le coin extérieur de l'œil gauche, le coin intérieur de l'œil gauche, le coin extérieur de l'œil droit, le coin intérieur de l'œil droit, le bout du nez. Un tel programme est connu en lui-même. Le programme de reconnaissance biométrique utilise par exemple un algorithme de type SIFT (de l'anglais « scale-invariant feature transform ») ou SURF (de l'anglais « speeded up robust features »).

Les caméras sont positionnés dans un couloir 50 pour avoir des champs 101, 102, 103 présentant deux-à-deux une zone de recouvrement 1012, 1023. Plus précisément, le champ 101 recouvre le champ 102 dans la zone 1012 ; le champ 102 recouvre le champ 103 dans la zone 1023 ; les champs 101 et 103 ne se recouvrent pas.

Le couloir 50 est fermé à ses deux extrémités respectivement par une porte d'entrée 51 et une porte de sortie 52 de manière à former un sas. L'ouverture de la porte d'entrée 51 est commandée par la présentation et le traitement d'un document d'identité à un détecteur 53 relié à l'unité de commande 4. Le détecteur 53 est agencé pour extraire du document d'identité des données biométriques du visage du possesseur du document d'identité et les transmettre à l'unité de traitement 4. Ces données sont contenues soit dans une photographie solidaire du document d'identité soit dans un circuit intégré incorporé dans le document d'identité. L'ouverture de la porte de sortie 52 est commandée par l'unité de traitement 4 lorsque les données biométriques extraites, par l'unité de traitement 4, des images fournies par les caméras 1, 2, 3 correspondent aux données biométriques du document d'identité. Ce mode de fonctionnement nominal est connu en lui-même et ne sera pas plus détaillé ici.

Pour que la reconnaissance automatique de visages dans son mode de fonctionnement nominal soit plus performante, il est nécessaire que les caméras 1, 2, 3 soient calibrées. Cette calibration permet par exemple à l'unité de traitement 4 de s'assurer qu'un visage détecté dans une image fournie par chaque caméra 1, 2, 3 se trouve bien dans le couloir et non à l'extérieur de celui-ci, et d'estimer la taille de visage pour vérifier que celle-ci est conforme à des données anthropométriques théoriques. Ceci permet à l'unité de traitement de détecter une tentative de fraude.

Dans le procédé de l'invention, cette calibration est effectuée automatiquement par l'unité de traitement 4 lors d'une opération de calibration initiée par l'installateur au moment de la mise en service de l'installation, puis lors d'opérations de calibration périodiquement initiées de manière autonome par l'unité de traitement 4 au cours du fonctionnement normal de l'installation.

Chaque opération de calibration comprend les étapes de :
- capturer des paires d'images simultanément avec les deux caméras,
- détecter dans chaque image d'une même paire, au niveau de la zone de recouvrement, des points caractéristiques sémantiquement défini,
- faire correspondre deux points caractéristiques sémantiquement définis de même type et détectés chacun dans une des images de chaque paire pour en déduire une relation entre les caméras.

Par exemple, l'unité de traitement 4 analyse deux images capturées au même instant respectivement par la caméra 1 et la caméra 2 pour y détecter des points caractéristiques sémantiquement définis.

Dans l'image de la caméra 1, sont détectés : un bout du nez, un coin extérieur de l'œil droit et un coin droit de la bouche.

Dans l'image de la caméra 2, sont détectés : un bout du nez, un coin extérieur de l'œil droit, un coin intérieur de l'œil droit, un coin extérieur de l'œil gauche, un coin intérieur de l'œil gauche, un coin droit de la bouche, et un coin gauche de la bouche.

L'unité de traitement 4 va donc établir des correspondances entre les points caractéristiques sémantiquement définis communs aux deux images en comparant les positions du bout du nez, du coin extérieur de l'œil droit et du coin droit de la bouche dans l'image fournie par la caméra 1 et l'image fournie par la caméra 2. Ces correspondances sont établies en associant à un même point de l'espace un point (par exemple le coin de l'œil droit) détecté dans chacune des images. Ceci permet de créer une relation entre les champs des deux caméras

Après une mise en œuvre du procédé à plusieurs reprises, une étape d'analyse des correspondances précédemment réalisées est effectuée pour en déduire un facteur de qualité des correspondances.

Bien entendu, l'invention n'est pas limitée aux modes de réalisation décrits mais englobe toute variante entrant dans le champ de l'invention telle que définie par les revendications.

L'invention est applicable à une installation dépourvue de moyens de reconnaissance biométrique, par exemple une installation de vidéo-surveillance.

On notera qu'il est possible au surplus, selon une variante de l'invention, de déduire des positions relatives des caméras et d'en déduire un traitement à appliquer aux images pour améliorer les performances biométriques (par exemple redresser une image dont on sait qu'elle a été prise par une caméra en contre-plongée).

L'installation peut avoir une structure différente et comprendre un nombre différent de caméras, au moins égal à deux.

## Revendications

1. Procédé d'auto-calibration d'au moins une première caméra et d'une deuxième caméra qui ont des champs couvrant un lieu en se recouvrant partiellement en une zone de recouvrement et qui sont reliées à une unité de traitement exécutant un programme agencé pour détecter, dans un élément, des points caractéristiques sémantiquement définis,
**caractérisé en ce que** le lieu couvert par les caméras est un couloir formant un sas dans lequel les caméras sont positionnées, l'unité de traitement étant adaptée pour exécuter un programme de reconnaissance biométrique de visages
le procédé comprenant les étapes de :
- capturer une image simultanément avec les deux caméras,
- détecter dans chaque image, au niveau de la zone de recouvrement, au moins un point caractéristique sémantiquement défini,
- faire correspondre deux points caractéristiques sémantiquement définis de même type et détectés chacun dans une des images pour en déduire au moins une relation entre les champs des deux caméras par association à un même point de l'espace d'un même point sémantiquement défini détecté dans chacune des images,
l'unité de traitement étant agencée pour, une fois cette calibration réalisée, s'assurer qu'un visage détecté dans une image fournie par chaque caméra se trouve bien dans le couloir et non à l'extérieur de celui-ci, et estimer la taille de visage pour vérifier que celle-ci est conforme à des données anthropométriques théoriques.

2. Procédé selon la revendication 1, dans lequel les points caractéristiques sémantiquement définis comprennent l'un au moins des points suivants :
- coin de la bouche droit,
- coin de la bouche gauche,
- coin extérieur de l'œil gauche,
- coin extérieur de l'œil droit,
- coin intérieur de l'œil gauche,
- coin intérieur de l'œil droit,
- centre intérieur de l'œil gauche,
- centre intérieur de l'œil droit,
- bout du nez.

3. Procédé selon la revendication 1, dans lequel, après une mise en œuvre du procédé à plusieurs reprises, une étape d'analyse des correspondances précédemment réalisées est effectuée pour en déduire un facteur de qualité des correspondances.

4. Installation de reconnaissance biométrique comprenant un couloir (50) fermé à ses deux extrémités respectivement par une porte d'entrée (51) et une porte de sortie (52), des caméras (1, 2, 3) réparties le long du couloir pour avoir des champs (101, 102, 103) se recouvrant partiellement deux-à-deux dans au moins une zone de recouvrement (1012, 1023), et une unité de traitement (4) reliée aux caméras et agencée pour mettre en œuvre un procédé selon l'une quelconque des revendications précédentes.

## Patentansprüche

1. Selbstkalibrierungsverfahren für mindestens eine erste Kamera und eine zweite Kamera, die Felder aufweisen, die einen Ort abdecken, indem sie sich in einem Überlappungsbereich teilweise überlappen, und die mit einer Verarbeitungseinheit verbunden sind, die ein Programm ausführt, das dazu eingerichtet ist, semantisch definierte charakteristische Punkte in einem Element zu detektieren,
**dadurch gekennzeichnet, dass** der durch die Kameras abgedeckte Ort ein Gang ist, der eine Schleuse bildet, in der die Kameras positioniert sind, wobei die Verarbeitungseinheit dazu angepasst ist, ein Programm zur biometrischen Gesichtserkennung auszuführen,
wobei das Verfahren die folgenden Schritte beinhaltet:
- simultanes Erfassen eines Bildes mit den zwei Kameras,
- Detektieren, in jedem Bild, im Bereich des Überlappungsbereichs, mindestens eines semantisch definierten charakteristischen Punkts,
- Abgleichen von zwei semantisch definierten charakteristischen Punkten gleichen Typs, die jeweils in einem der Bilder detektiert werden, um daraus mindestens eine Beziehung zwischen den Feldern der zwei Kameras abzuleiten, indem ein gleicher semantisch definierter Punkt, der in jedem der Bilder detektiert wird, einem gleichen Punkt im Raum zugeordnet wird,
wobei die Verarbeitungseinheit dazu eingerichtet ist, nach Abschluss dieser Kalibrierung sicherzustellen, dass sich ein Gesicht, das in einem durch jede Kamera bereitgestellten Bild detektiert wird, tatsächlich in dem Gang und nicht außerhalb desselben befindet, und die Gesichtsgröße zu ermitteln, um zu überprüfen, dass diese theoretischen anthropometrischen Daten entspricht.

2. Verfahren nach Anspruch 1, wobei die semantisch definierten charakteristischen Punkte mindestens einen der folgenden Punkte beinhalten:
- rechter Mundwinkel,
- linker Mundwinkel,
- Außenwinkel des linken Auges,
- Außenwinkel des rechten Auges,
- Innenwinkel des linken Auges,
- Innenwinkel des rechten Auges,
- Mittelpunkt des linken Auges,
- Mittelpunkt des rechten Auges,
- Nasenspitze.

3. Verfahren nach Anspruch 1, wobei nach mehrmaligem Umsetzen des Verfahrens ein Schritt des Analysierens der zuvor durchgeführten Abgleiche vorgenommen wird, um daraus einen Qualitätsfaktor der Abgleiche abzuleiten.

4. Biometrische Erkennungseinrichtung, die Folgendes beinhaltet: einen Gang (50), der an seinen beiden Enden jeweils durch eine Eingangstür (51) und eine Ausgangstür (52) geschlossen ist, Kameras (1, 2, 3), die entlang des Ganges verteilt sind, um Felder (101, 102, 103) zu erhalten, die sich in mindestens einem Überlappungsbereich (1012, 1023) jeweils paarweise teilweise überlappen, und eine Verarbeitungseinheit (4), die mit den Kameras verbunden ist und dazu eingerichtet ist, ein Verfahren nach einem beliebigen der vorhergehenden Ansprüche umzusetzen.

## Claims

1. Method of automatically calibrating at least one first camera and at least one second camera that have fields of view covering a location while overlapping partially in an overlap zone, and that are connected to a processor unit executing a program arranged to detect semantically-defined characteristic points in an element,
**characterized in that** the location covered by the cameras is a passage forming a sally port in which the cameras are positioned, the processor unit being configured to execute a program for biometric face recognition,
the method comprising the steps of:
- capturing an image simultaneously with the two cameras;
- detecting in each image, in the overlap zone, at least one semantically-defined characteristic point; and
- putting two semantically-defined characteristic points of the same type, each detected in one of the images, into correspondence in order to deduce therefrom at least one relationship between the fields of view of the two cameras, through association of a given semantically defined point detected in each of the images with the same point in space,
the processor unit being arranged to, once this calibration has been carried out, ensure that a face detected in an image provided by each camera is indeed to be found in the passage and not outside it, and to estimate the size of the face in order to verify that it matches theoretical anthropometric data.

2. Method according to Claim 1, wherein the semantically-defined characteristic points comprise at least one of the following points:
- right corner of the mouth;
- left corner of the mouth;
- outside corner of the left eye;
- outside corner of the right eye;
- inside corner of the left eye;
- inside corner of the right eye;
- inside centre of the left eye;
- inside centre of the right eye;
- tip of the nose.

3. Method according to Claim 1, wherein, after performing the method several times over, a step of analysing the previously-established correspondences is performed in order to deduce therefrom a quality factor for the correspondences.

4. Biometric recognition installation comprising a passage (50) that is closed at both ends, respectively by an entry door (51) and by an exit door (52), cameras (1, 2, 3) that are distributed along the passage so as to have fields of view (101, 102, 103) that partially overlap pairwise in at least one overlap zone (1012, 1023), and a processor unit (4) that is connected to the cameras and arranged to implement a method according to any one of the preceding claims
